# EUROPÄISCHE PATENTSCHRIFT

(11) **EP 1 862 486 B1**
(45) Veröffentlichungstag und Bekanntmachung des Hinweises auf die Patenterteilung: **09.02.2011**
(21) Anmeldenummer: 07010486.4
(22) Anmeldetag: 25.05.2007
(51) Int. Cl.: C08G 18/08, C08G 18/10, C08G 18/28, C08G 18/70, C08G 18/73, C08G 18/79, C08G 18/80, C09D 175/06

(54) **Lösemittelarme oder lösemittelfreie Vernetzer-Dispersionen mit Pyrazol-blockierten Isocyanatgruppen**
Low-solvent or solvent-free cross-linking agent dispersions with pyrazole-blocked isocyanate groups
Dispersions en réseau à faible teneur en solvants ou sans solvants à groupes isocyanates bloqués par le pyrazol

(30) Priorität: 31.05.2006 DE 102006025313
(43) Veröffentlichungstag der Anmeldung: 05.12.2007
(73) Patentinhaber: Bayer MaterialScience AG, 51368 Leverkusen (DE)
(72) Erfinder: Dörr, Sebastian, 40597 Düsseldorf (DE); Müller, Heino, 51375 Leverkusen (DE); Blum, Harald, 51375 Leverkusen (DE)

(56) Entgegenhaltungen:
- EP-A- 0 899 282
- EP-A- 0 942 023
- WO-A-02/24778
- DE-A1- 10 260 269

## Beschreibung

Die vorliegende Erfindung betrifft die Herstellung wässriger, lösemittelfreier bzw. lösemittelarmer, lagerstabiler PUR-Vemetzerdispersionen mit Pyrazol-blockierten Isocyanatgruppen, daraus hergestellte Beschichtungsmittel und deren Verwendung in Beschichtungen.

In den letzten Jahren stieg die Bedeutung wässriger Lacke und Beschichtungsmittel aufgrund immer strengerer Emissionsrichtlinien bezüglich der bei der Lackapplikation freiwerdenden Lösemittel stark an. Obwohl inzwischen bereits für viele Anwendungsbereiche wässrige Lacksysteme zur Verfügung stehen, können diese das hohe Qualitätsniveau konventioneller, lösemittelhaltiger Lacke hinsichtlich Lösemittel- und Chemikalienbeständigkeit oder auch Elastizität und mechanischer Belastung oftmals nicht erreichen.

Auch Wasserlacksysteme, basierend auf wässrigen Polyurethandispersionen, enthalten häufig noch erhebliche Mengen Lösemittel. Die Vermeidung dieser Lösemittel bei Polyurethandispersionen gelingt im Allgemeinen nicht, da die Herstellung entsprechender Dispersionen über Prepolymere oft Lösemittel erfordert oder den Dispersionen oftmals ein sogenanntes Colösemittel (Coaleszenzmittel) zugesetzt werden muss, um ein Herabsetzen der Mindestfilmbildungstemperatur zu erreichen. Dies gewährleistet, dass bei der Verfilmung der Beschichtungsmittel schon bei oder unter Raumtemperatur genügend harte Schichten gebildet werden. Auch die Lagerstabilität der PUR-Dispersionen und der Lackformulierungen ist ohne Lösemittel häufig nicht gegeben.

Insbesondere das Lösemittel NMP (*N*-Methylpyrrolidon) ist im Bereich der wässrigen Dispersionen und Lacke weit verbreitet. Ein Beispiel sind die Carbonsäure-hydrophilierten Polyisocyanat-Vernetzerdispersionen mit Dimethylpyrazol-blockierten Isocyanatgruppen, die in EP-A 0942023 beschrieben sind. Diese Vemetzerdispersionen, sowie die daraus hergestellten Lacke enthalten NMP als Colösemittel.

Eine colöserfreie Herstellung des in EP-A 0942023 beschriebenen, DMP-blockierten Polyisocyanatvemetzers durch Verzicht auf das Lösemittel, ist aus Viskositätsgründen nicht möglich.

Die in WO 1997012924 beschriebenen nichtionisch-hydrophilierten Polyisocyanat-Vernetzer-Dispersionen mit pyrazolisch blockierten Isocyanatgruppen enthalten als Colösemittel ca. 7 % Butylglykol. Dies zeichnet sich ähnlich wie NMP durch einen verhältnismäßig hohen Siedepunkt aus. Eine Abtrennung zur Herstellung lösemittelfreier Dispersionen ist nicht möglich.

In DE 19 914 885 werden Polyurethandispersionen mit Dimethylpyrazol-blockierten Isocyanatgruppen zur Herstellung von Glasfaserschlichten beschrieben. Diese Dispersionen werden unter Verwendung eines organischen Lösemittels, das nach dem Dispergieren in Wasser destillativ wieder aus der Dispersion entfernt wird, hergestellt. Beispiel 1 beschreibt die Herstellung in einer 62 gew-prozentigen acetonischen Lösung. Beim Aufbau dieser Dispersionen werden Polyolkomponenten mit Molekulargewichten von mindestens 350 g/mol in einem Anteil von 30 bis 90 % des Prepolymeren verwendet. Durch den hohen Anteil an Weichsegmenten können die beschriebenen Dispersionen nicht als Vernetzerkomponente für hochwertige Beschichtungsmittel eingesetzt werden, da die Lacke keine ausreichenden Härten erreichen können.

In DE 3 613 492 wird ein Acetonverfahren zur Herstellung colöserfreier Polyurethan-Polyharnstoff-Dispersionen beschrieben. Das Prepolymer, welches in diesem Fall nicht blockiert ist, wird in einer 20 bis 50 gew.-prozentigen Lösung in einem flüchtigen organischen Lösemittel, wie z.B. Aceton, hergestellt und das Lösemittel nach Dispergierung in Wasser destillativ entfernt.

Der Ersatz von NMP im Verfahren gemäß EP-A 0942023 durch Aceton in Mengen von 50 oder 62 Gew.-% wie in DE 19914885, führt zu DMP-blockierten Polyisocyanat-Vernetzern, die allerdings nicht lagerstabil sind.

Die Aufgabe der vorliegenden Erfindung bestand nun in der Bereitstellung lagerstabiler Polyurethandispersionen mit Pyrazol-blockierten Isocyanatgruppen, ähnlich, wie sie gemäß EP-A 0 942 023 erhalten werden können, die jedoch lösemittelfrei bzw. -arm sind und insbesondere kein NMP oder Butylglykol enthalten dürfen. Darüber hinaus sollten die aus diesen Dispersionen hergestellten Beschichtungen eine gute Filmoptik, eine gute Chemikalienbeständigkeit und Pendelhärten von über 80 Sekunden aufweisen.

Es wurde nun gefunden, dass diese Aufgabe durch ein spezielles Herstellungsverfahren gelöst werden kann. Gegenstand der Erfindung ist ein Verfahren zur Herstellung von Dispersionen blockierter Polyurethanprepolymere, dadurch gekennzeichnet, dass
I) zunächst ein blockiertes Polyurethanprepolymer durch Umsetzung von
   a) 100 Äquivalent-% mindestens eines Polyisocyanats mit
   b) 50 bis 90 Äquivalent-% bezogen auf die isocyanatreaktiven Gruppen 1H-Pyrazole als Blockierungsmitttel,
   c) 5 bis 45 Äquivalent-% bezogen auf die isocyanatreaktiven Gruppen einer Monohydroxycarbonsäure als Hydrophilierungsmittel und
   d) 0 bis 25 Äquivalent-% bezogen auf die isocyanatreaktiven Gruppen einer Polyhydroxycarbonsäure als Hydrophilierungsmittel und
   e) 0 bis 15 Äquivalent-% bezogen auf die isocyanatreaktiven Gruppen einer mindestens, bezogen auf isocyanatreaktiven Gruppen, di- oder polyfunktionellen Kettenverlängerungskomponente mit einem Molekulargewicht von 32 bis 350 g/mol,
      hergestellt wird, wobei
      i) dies unter Verwendung von wasser(teil)mischbaren, gegenüber NCO-Gruppen inerten, organischen Lösemitteln mit Siedepunkten unterhalb von 120°C (bei 1013 mbar) erfolgt,
      ii) und diese in einer Menge verwendet werden, so dass das in der Reaktionslösung enthaltene Polyurethanprepolymer nach vollständiger Umsetzung in einer Menge von 70 bis 98 Gew.-% vorliegt,
II) die aus Schritt (I) erhaltene Polyurethanprepolymer-Lösung in Wasser dispergiert wird, wobei vor, während oder nach der Dispergierung eine zumindest teilweise Deprotonierung der Carbonsäuregruppen mit einer Base erfolgt, und dann
III) ggf. auch parallel während des Dispergierens, das enthaltene organische Lösungsmittel vollständig destillativ entfernt wird, so dass nach der Destillation weniger als 5 Gewichtsprozent des Lösemittels in der Dispersion erhalten bleiben. Bevorzugt bleiben weniger als 3 Gewichtsprozent, besonders bevorzugt weniger als 1,5 Gewichtsprozent, des Lösemittels in der Dispersion erhälten.

Die Mengenverhältnisse der Reaktionspartner werden bevorzugt so gewählt, dass das Äquivalent-Verhältnis der Isocyanatkomponente a) zu gegenüber Isocyanat reaktionsfähigen Gruppen der Komponenten b), c), d) und e) bei 1:0,5 bis 1:1,7, besonders bevorzugt bei 1:0,6 bis 1:1,5 und ganz besonders bevorzugt bei 1:0,7 bis 1:1,3 liegt.

Ein weiterer Gegenstand der Erfindung sind Dispersionen erhältlich nach dem erfindungsgemäßen Verfahren.

Als geeignete Polyisocyanate fmden in a) die dem Fachmann an sich bekannten NCO-funktionellen Verbindungen einer Funktionalität von bevorzugt 2 oder mehr Verwendung. Dies sind typischerweise aliphatische, cycloaliphatische, araliphatische und/oder aromatische Di- oder Triisocyanate sowie deren höhermolekulare Folgeprodukte mit Iminooxadiazindion-, Isocyanurat-, Uretdion-, Urethan-, Allophanat-, Biuret-, Harnstoff-, Oxadiazintrion, Oxazolidinon-, Acylharnstoff- und/oder Carbodiimid-Strukturen, die zwei oder mehr freie NCO-Gruppen aufweisen.

Beispiele für solche Di- oder Triisocyanate sind Tetramethylendiisocyanat, Cyclohexan-1,3- und 1,4-diisocyanat, Hexamethylendiisocyanat (HDI), 1-Isocyanato-3,3,5-trimethyl-5-isocyanatomethyl-cyclohexan (Isophorondiisocyanat, IPDI), Methylen-bis-(4-isocyanatocyclohexan), Tetramethylxylylendiisocyanat (TMXDI), Triisocyanatononan, Toluylendiisocyanat (TDI), Diphenylmethan-2,4'-und/oder 4,4'-diisocyanat (MDI), Triphenylmethan-4,4'-diisocyanat, Naphtylen-1,5-diisocyanat, 4-Isocyanatomethyl-1,8-octandiisocyanat (Nonantriisocyanat, Triisocyanatononan, TIN) und/oder 1,6,11 - Undecantriisocyanat sowie deren beliebige Mischungen und ggf. auch Mischungen anderer Di-, Tri- und/oder Polyisocyanate.

Solche Polyisocyanate haben typischerweise Isocyanatgehalte von 0,5 bis 50 Gew.-%, bevorzugt 3 bis 30 Gew.-%, besonders bevorzugt 5 bis 25 Gew.-%.

Bevorzugt werden im erfindungsgemäßen Verfahren die höhermolekularen Verbindungen mit Isocyanurat-, Urethan-, Allophanat-, Biuret-, Iminooxadiazintrion-, Oxadiazintrion- und/oder Uretdiongruppen auf Basis aliphatischer und/oder cycloaliphatischer Diisocyanate eingesetzt.

Besonders bevorzugt werden im erfindungsgemäßen Verfahren die höhermolekularen Verbindungen mit Biuret-, Iminooxadiazindion,- Isocyanurat- und/oder Uretdiongruppen auf Basis von Hexamethylendiisocyanat, Isophorondiisocyanat und/oder 4,4'-Diisocyanatodicyclohexylmethan eingesetzt.

Als Blockierungsmittel der Komponente b) werden 1H- Pyrazole, wie z.B. Pyrazol, 3-Methylpyrazol oder 3,5-Dimethylpyrazol verwendet. Bevorzugt findet 3,5-Dimethylpyrazol Verwendung, das z.B. gut durch Kondensation von Hydrazinhydrat mit Acetylaceton zugänglich ist. Auch Gemische dieser Blockierungsmittel und Gemische mit anderen Blockierungsmitteln wie z.B. Butanonoxim, Acetonoxim, *N*-tert.-Butyl-benzylamin und/oder Diisopropylamin können verwendet werden.

Geeignete Monohydroxycarbonsäuren der Komponente c) sind zum Beispiel 2-Hydroxyessigsäure, 3-Hydroxypropansäure, 12-Hydroxy-9-octadecansäure (Rizinolsäure), Hydroxypivalinsäure (2-Hydroxymethyl-2-methylpropionsäure) oder Milchsäure. Bevorzugt ist Hydroxypivalinsäure.

Geeignete Polyhydroxycarbonsäuren der Komponente d) sind z.B. Dihydroxycarbonsäuren wie Dimethylolessigsäure, 2,2-Dimethylolbuttersäure, 2,2- Dimethylolpentansäure, Dihydroxybemsteinsäure, Dimethylolbuttersäure oder Dimethylolpropionsäure. Bevorzugt ist Dimethylolpropionsäure.

Zusätzlich zu der Hydrophilierung durch mindestens eine Hydroxycarbonsäure können noch geeignete nichtionisch hydrophilierend wirkende Verbindungen eingesetzt werden. Geeignete nichtionisch hydrophilierende Verbindungen sind z.B. Polyoxyalkylenether, die mindestens eine Hydroxy- oder Aminogruppe enthalten. Diese sind in an sich bekannter Weise durch Alkoxylierung geeigneter Startermoleküle zugänglich.

Geeignete Startermoleküle sind beispielsweise gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether, wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können. Bevorzugt ist die blockweise Addition von Ethylenoxid und Propylenoxid an den Starter.

Bei den Polyalkylenoxidpolyethern handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Der Gehalt an Ethylenoxid-Einheiten liegt bezüglich des Gesamt-Festgehaltes der Komponenten a) bis e) unter 5 Gew.-%, bevorzugt unter 3 Gew.-%, besonders bevorzugt unter 2 Gew.-%.

Als Kettenverlängerungskomponente e) kommen beispielsweise Di-, Tri- und/oder Polyole in Betracht. Beispiele sind Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Trimethylolether, Trimethylolpropan, Rizinusöl, Glycerin und/oder Gemische der genannten Produkten, ggf. mit weiteren Di-, Tri- und/oder Polyolen. Auch ethoxilierte und/oder propoxilierte Di-, Tri- und/oder Polyole wie z.B. ethoxiliertes und/oder propoxiliertes Trimethylolpropan, Glycerin und/oder Hexandiol-1,6 können eingesetzt werden.

Weiterhin können Di-, Tri- und/oder Polyamine mit primären und/oder sekundären Aminogruppen eingesetzt werden. Beispiele sind Ethylendiamin, 1,3-Propylendiamin, 1,6-Hexamethylendiamin, Isophorondiamin, 4,4'-Diaminodicyclohexylmethan, Diethylentriamin oder Hydrazin.

Weiterhin können auch Hydroxide eingesetzt werden, wie beispielsweise Adipinsäuredihydroxid.

Auch Gemische von Aminen und Alkoholen sind möglich, ebenso gemischt-funktionelle Verbindungen mit verschiedenen isocyanatreaktiven Gruppen können eingesetzt werden, wie z.B. N-Methylethanol- und N-Methylisopropanolamin, 1-Amino-propanol, Diethanolamin, 1,2-Hydroxyethanthiol oder 1-Aminopropanthiol.

Bevorzugte Kettenverlängerer sind Butandiol-1,4, Butandiol-1,3, Hexandiol-1,6 und/oder Trimethylolpropan. Bevorzugt besitzen die Kettenverlängerer der Komponente e) ein Molekulargewicht von 32 bis 350 g/mol, besonders bevorzugt von 62 bis 200 g/mol .

Zur Beschleunigung der Urethanisierung können dem Reaktionsgemisch auch Katalysatoren zugesetzt werden. Geeignete Katalysatoren sind beispielsweise tertiäre Amine, Zinn-, Zink- oder Wismuthverbindungen oder basische Salze. Bevorzugt sind Dibutylzinndilaurat und Dibutylzinnoctoat.

Als wasser(teil)mischbare Lösemittel der Komponente i) kommen aliphatische Ketone oder aliphatische oder cycloaliphatische Ether in Betracht. Beispiele solcher Lösungsmittel sind Aceton, Methylethylketon, tert.-Butylmethylether oder Tetrahydrofuran. Bevorzugt sind aliphatische Ketone mit 3 bis 6 Kohlenstoffatomen. Besonders bevorzugt ist Aceton.

Ebenso ist die Verwendung von Mischungen der entsprechenden Lösemittel möglich.

Das Lösemittel wird in einer Menge verwendet, so dass das in der Reaktionslösung enthaltene Polyurethanpolymer in einer Menge von 70 bis 98 Gew.-%, bevorzugt 80 bis 95 Gew.-% vorliegt.

Das Lösemittel kann portionsweise oder auf einmal zugegeben werden. Die Zugabe kann bei jedem Schritt vor der Dispergierung erfolgen. In einer bevorzugten Variante wird das Lösemittel zugesetzt, nachdem ein Teil der Isocyanatgruppen abreagiert ist, aber noch freie Isocyanatgruppen vorhanden sind.

Die destillative Entfernung des Lösungsmittels erfolgt vorzugsweise im Vakuum.

Der Vorteil dieser Verfahrensweise liegt in einer reduzierten Viskosität bei der Herstellung des Prepolymers, ohne dass das Lösemittel in größeren Mengen in der Dispersion vorhanden ist.

Beispiele für in II) zu verwendende Deprotonierungsmittel sind basische Verbindungen wie Ammoniak, Triethylamin, N,N-Dimethylaminoethanol, Dimethylcyclohexylamin, Triethanolamin, Methyldiethanolamin, Diisopropanolamin, Ethyldiisopropylamin, Diisopropylcyclohexylamin, N-Methylmorpholin, 2-Amino-2-methyl-1-propanol oder deren beliebige Gemische. Bevorzugte Deprotonierungsmittel sind 2-Amino-2-methyl-1-propanol und tert. Amine wie Triethylamin und N,N-Dimethylethanolamin, besonders bevorzugt ist N,N-Dimethylethanolamin.

Die Menge des eingesetzten Deprotonierungsmittel wird im Allgemeinen so bemessen, dass der Deprotonierungsgrad der in den erfindungsgemäßen Polyurethanen vorhandenen Carbonsäuregruppen (molares Verhältnis von eingesetztem Amin zu vorhandenen Säuregruppen) mindestens 40 %, bevorzugt 70 % bis 130 %, besonders bevorzugt 90 bis 110 % beträgt. Die Deprotonierung kann dabei vor, während oder nach dem Dispergierschritt erfolgen. Bevorzugt ist jedoch die Deprotonierung vor der Wasserzugabe.

Zur Dispergierung in Wasser gemäß Schritt II) wird die Polyurethanprepolymer-Lösung gegebenenfalls unter starker Scherung, wie z.B. starkem Rühren, entweder in das Dispergierwasser eingetragen oder es wird umgekehrt das Dispergierwasser zu den Prepolymerlösungen gerührt. Bevorzugt wird das Wasser in das gelöste Prepolymer gegeben.

Nach beendeter Dispergierung wird in Schritt III) das Lösemittel destillativ entfernt. Bevorzugt erfolgt die Destillation im Vakuum bei Temperaturen von 20 bis 70°C, besonders bevorzugt von 30 bis 50°C. Das Vakuum wird bevorzugt in einem Bereich von 50 bis 500 mbar eingestellt, besonders bevorzugt in einem Bereich von 100 bis 200 mbar. Es kann dabei zuerst die gewünschte Temperatur eingestellt und das zum Destillieren notwendige Vakuum angepasst werden, oder umgekehrt. In einer bevorzugten Verfahrensweise wird zunächst ein Vakuum im Bereich von 100 bis 200 mbar eingestellt und die Dispersion anschließend von Raumtemperatur auf 40°C erwärmt.

In einer bevorzugten Ausführungsform des erfindungsgemäßen Verfahrens wird das Polyisocyanat (Komponente I)a)) vorgelegt und zunächst mit einer Teilmenge des DMP (Blockierungsmittel gemäß Komponente I)b)) in einer ersten Reaktionsstufe bei Temperaturen um 70°C teilweise blockiert. Bevorzugt werden 25 bis 60 Äquivalent-% der Isocyanatgruppen in diesem ersten Schritt umgesetzt. Anschließend werden direkt nacheinander die restlichen isocyanatreaktiven Komponenten und das Lösemittel zugesetzt und so lange zum Rückfluss erhitzt, bis keine Isocyanatgruppen mehr nachweisbar sind. In der bevorzugten Ausführungsform werden die Säuregruppen anschließend ganz oder teilweise mit einer Base deprotoniert, dann wird mit Wasser dispergiert und danach das Aceton im Vakuum entfernt.

Die erfindungsgemäßen Dispersionen weisen einen mittleren Teilchendurchmesser (bestimmt z.B. durch LKS-Messungen, Messung bei 23°C nach Verdünnung der Probe in dem ca. 100fachen Volumen an entionisiertem Wasser, Messgerät: Malvern Zetasizer 1000, Malvern Inst. Limited) von 5 bis 300 nm, vorzugsweise von 10 bis 150 nm auf. Dies betrifft mindestens 90 % der Teilchen, bevorzugt mindestens 75 %, besonders bevorzugt mindestens 60 %.

Der Festkörpergehalt der Dispersionen beträgt bevorzugt 20 bis 55 Gew.-%, besonders bevorzugt 25 bis 45 Gew.-%.

Die erfindungsgemäßen blockierten Polyisocyanat-Dispersionen können z.B. zur Herstellung von einbrennbaren Beschichtungsmitteln (Einbrennlacken), zur Beschichtung von Substraten, vorzugsweise aus Metallen, mineralischen Stoffen, Glas, Holz oder Kunststoffen verwendet werden. Hierzu können die erfindungsgemäßen Überzugsmittel durch Streichen, Rakeln, Tauchen, Spritzauftrag wie Druckluft- oder Airless-Spritzen, sowie durch elektrostatischen Auftrag, beispielsweise Hochrotationsglockenauftrag, aufgetragen werden. Die Trockenfilm-Schichtdicke kann beispielsweise bei 10 bis 120 µm liegen. Das Aushärten der getrockneten Filme erfolgt durch Einbrennen im Temperaturbereich von 90 bis 190°C, bevorzugt 110 bis 180°C, besonders bevorzugt 120 bis 160°C.

Ein weiterer Gegenstand der Erfindung ist daher die Verwendung der erfindungsgemäßen, blockierten Polyurethanprepolymer-Dispersionen zur Herstellung von Beschichtungsmitteln, von Kleb- und Dichtstoffen und von Elastomeren.

Ein weiterer Gegenstand der Erfindung sind Beschichtungsmittel, Kleb- und Dichtstoffe, sowie Elastomere, erhältlich unter Verwendung der erfindungsgemäßen Dispersionen.

Zur Herstellung von Beschichtungsmitteln (Einbrennlacken), von Klebstoffen und von Elastomeren können die erfindungsgemäßen Polyisocyanat-Vernetzerdispersionen mit blockierten Isocyanatgruppen mit mindestens difunktionellen, isocyanatreaktiven Verbindungen z.B. beliebigen Polyolkomponenten, vorzugsweise in Form wässriger Dispersionen, gemischt werden.

Solche Polyolkomponenten können Polyhydroxypolyester, Polyhydroxypolyurethane, Polyhydroxypolyether, Polycarbonat-Diole oder Hydroxylgruppen aufweisende Polymerisate, z.B. die an sich bekannten Polyhydroxypolyacrylate, Polyacrylat-polyurethane und/oder Polyurethanpolyacrylate sein. Diese weisen im Allgemeinen eine Hydroxylzahl von 20 bis 200, vorzugsweise von 50 bis 130 mg KOH/g auf. Die üblicherweise erforderliche hydrophile Modifizierung dieser Polyhydroxylverbindungen zur Herstellung von Dispersionen erfolgt nach an sich bekannten Methoden, wie sie beispielsweise in EP-A-0 157 291, EP-A-0 498 156 oder EP-A-0 427 028 offenbart sind.

Auch eine Mischung mit anderen alkoholreaktiven Verbindungen wie z.B. Aminovernetzerharzen wie beispielsweise Melaminharzen und/oder Harnstoffharzen zur zusätzlichen Vernetzung beim Einbrennen ist möglich.

Die Herstellung der Lacke, Farben, Klebstoffe und anderen Formulierungen aus den erfindungsgemäßen Dispersionen erfolgt nach an sich bekannten Methoden. Außer den blockierten Polyisocyanaten und Polyolen können den Formulierungen übliche Additive und andere Hilfsstoffe (z.B. Pigmente, Füllstoffe, Verlaufsmittel, Entschäumer, Katalysatoren) zugesetzt werden.

### Beispiele

**Chemikalien**
**Desmodur^{®} N 3300** :
   Isocyanurat auf Basis von Hexamethylendiisocyanat, Bayer MaterialScience AG, Leverkusen, DE
**Desmodur^{®} W :**
   4,4'-Diisocyanatodicyclohexylmethan, Bayer MaterialScience AG, Leverkusen, DE
**Bayhydrol^{®} D 270**
   Hydroxylgruppenhaltige, wässrige Polyesterdispersion, Bayer MaterialScience AG, Leverkusen, DE
**Additol XW 395**
   Verlaufshilfsmittel/Entschäumer, UCB Chemicals, St. Louis, USA
**Surfynol 104**
   Verlaufshilfsmittel/Entschäumer, Air Products, Hattingen, DE
**Hydroxypivalinsäure**
   Perstorp Specialty Chemicals AB, Perstorp, Schweden

Die weiteren Chemikalien wurden vom Chemikalienfachhandel bezogen (Sigma-Aldrich Chemie GmbH, Taufkirchen, DE).

Sofern nicht abweichend vermerkt, beziehen sich alle Prozentangaben auf Gewichtsprozent.

Sofern nicht abweichend vermerkt, beziehen sich alle analytischen Messungen auf Temperaturen von 23°C.

Die angegebenen Viskositäten wurden mittels Rotationsviskosimetrie nach DIN 53019 bei 23°C mit einem Rotationsviskosimeter der Firma Anton Paar Germany GmbH, Ostfildern, DE bestimmt.

NCO-Gehalte wurden, wenn nicht ausdrücklich anders erwähnt, volumetrisch gemäß DIN-EN ISO 11909 bestimmt.

Die angegebenen Partikelgrößen wurden mittels Laserkorrellationsspektroskopie (Gerät: Malvern Zetasizer 1000, Malver Inst. Limited) bestimmt.

Die Festkörpergehalte wurden ermittelt durch Erhitzen einer ausgewogenen Probe auf 120°C. Bei Gewichtskonstanz wurde durch erneutes Auswiegen der Probe der Festkörpergehalt berechnet.

Die Kontrolle auf freie NCO-Gruppen wurde mittels IR-Spektroskopie (Bande bei 2260 cm⁻¹) durchgeführt.

Als Lagertest wurden je 250 ml der Dispersion abgefüllt und sowohl bei Raumtemperatur als auch bei 40°C gelagert. Der jeweilige Lagerzeitraum ist bei den einzelnen Beispielen angegeben. Als Wert für die Stabilität wurde die Höhe des Bodensatzes bezogen auf ein Gefäß mit einer Bodenfläche von 25 cm² ermittelt. Oberhalb einer Höhe von 0,5 mm galt die Dispersion als nicht stabil.

### 1) Vergleichsbeispiel 1: Vernetzerdispersion, nicht erfindungsgemäß, Herstellung analog Beispiel 1 in EP-A 0942023, jedoch ohne NMP, ohne Colösemittel

In einer Standard-Rührapparatur wurden 200 g (1 Val) Desmodur N 3300 vorgelegt und unter Stickstoff auf 50°C aufgeheizt. Anschließend gab man eine Teilmenge des 3,5-Dimetylpyrazol (DMP) (48,0 g; 0,5 Val) portionsweise innerhalb von 30 Minuten zu der Schmelze. Es wurde bei 70-80°C gerührt, bis ein Isocyanatgehalt von ca. 8,5% erreicht wurde.

Zu der Schmelze wurden 29,0 g (0,25 Val) Hydroxypivalinsäure gegeben und bei 65°C gerührt, bis ein Isocyanatgehalt von 3,8% erreicht wurde.

Anschließend wurden weitere 24,0 g (0,25 Val) DMP zugesetzt und bei 65°C gerührt bis IR-spektroskopisch keine Isocyanatgruppen mehr nachweisbar waren. Dabei wurde das Prepolymer sehr viskos und wickelte sich teilweise um den Rührer.

Dann wurden 22,2 g (0,25 Val) N,N-Dimethyl-ethanolamin zugegeben, 10 Min. nachgerührt und unter starkem Rühren wurde 451,4 g 70°C warmes, entionisiertes Wasser zugegeben.

Die erhaltene Dispersion hatte nachfolgende Eigenschaften:

| | |
|---|---|
| Feststoffgehalt: | ca. 38% |
| pH-Wert: | ca. 8,4 |
| Viskosität | ca. 400 mPas |
| Mittlere Partikelgröße (LKS): | 74 nm |

Lagertest: Es bildete sich starker Bodensatz bei 40°C-Lagerung nach wenigen Tagen und bei Raumtemperatur nach zwei Wochen

Die Dispersion war nicht lagerstabil. Weiterhin war die Herstellbarkeit durch die hohe Viskosität des Prepolymers problematisch.

### 2) Vergleichsbeispiel 2: Vernetzerdispersion, nicht erfindungsgemäß, Herstellung analog Beispiel 1 in EP-A 0942023, jedoch ohne NMP, im Acetonverfahren (50% ige Lösung des Prepolymers in Aceton)

In einer Standard-Rührapparatur wurden 200 g (1 Val) Desmodur N 3300 vorgelegt und unter Stickstoff auf 50°C aufgeheizt. Anschließend gab man eine Teilmenge des 3,5-Dimethylpyrazol (DMP) (48,0 g; 0,5 Val) portionsweise innerhalb von 30-Minuten zu der Schmelze. Es wurde bei 70-80°C gerührt, bis ein Isocyanatgehalt von ca. 8,5% erreicht wurde. Zu der Schmelze wurden 29,0 g (0,25 Val) Hydroxypivalinsäure und 302 g Aceton gegeben und es wurde bei 50-65°C gerührt, bis ein Isocyanatgehalt von 1,8% erreicht wurde..

Anschließend wurden weitere 24,0 g (0,25 Val) DMP zugesetzt und weiter gerührt, bis IR-spektroskopisch keine Isocyanatgruppen mehr nachweisbar waren.

Dann wurden 22,2 g (0,25 Val) N,N-Dimethyl-ethanolamin zugegeben, 10 Min. nachgerührt und unter starkem Rühren 451,4 g 50°C warmes, entionisiertes Wasser zugegeben.

Nach Entfernen des Acetons wurde im Vakuum (120 mbar) bei ca. 40°C abdestilliert. Danach lag keine Dispersion vor, sondern es bildete sich eine große Menge eines weißen Bodensatzes.

### 3) Vergleichsbeispiel 3: Vernetzerdispersion analog Vergleichsbeispiel 2, jedoch mit einem erhöhten Feststoffgehalt im Prepolymer

Es wurde verfahren, wie in Vergleichsbeispiel 2 beschrieben, jedoch wurde statt mit einer 50%igen Lösungen des Prepolymers in Aceton mit einer 62%igen Lösung gearbeitet.

Auch in diesem Fall bildete sich keine stabile Dispersion.

### 4) Beispiel 1: Vernetzerdispersion, erfindungsgemäß, Herstellung analog Beispiel 1 in EP-A 0942023, jedoch ohne NMP Herstellung mit wenig Aceton (95% ige Lösung des Prepolymers in Aceton)

Es wurde vorgegangen wie in Vergleichsbeispiel 1 beschrieben, dabei wurde jedoch zusammen mit der Hydroxypivalinsäure 16 g Aceton zugesetzt. Das Aceton wurde nach Zugabe des entionisierten Wassers im Vakuum (120 mbar) bei ca. 40°C abdestilliert

Die erhaltene feinteilige Dispersion hatte nachfolgende Eigenschaften:

| | |
|---|---|
| Feststoffgehalt: | ca. 39% |
| pH-Wert: | ca. 8,4 |
| Viskosität | ca. 9600 mPas |
| Mittlere Partikelgröße (LKS): | 36 nm |

Lagertest: mindestens 3 Monate stabil bei Raumtemperatur und bei 40°C

### 5) Beispiel 2: Vernetzerdispersion, erfindungsgemäß, Herstellung analog Beispiel 1 (85% ige Lösung des Prepolymers in Aceton)

Es wurde vorgegangen wie in Vergleichsbeispiel 1 beschrieben, dabei wurde jedoch zusammen mit der Hydroxypivalinsäure 45 g Aceton zugesetzt. Das Aceton wurde nach Zugabe des entionisierten Wassers im Vakuum (120 mbar) bei ca. 40°C abdestilliert

Die erhaltene feinteilige Dispersion hatte nachfolgende Eigenschaften:

| | |
|---|---|
| Feststoffgehalt: | ca. 39% |
| pH-Wert: | ca. 8,7 |
| Viskosität | ca. 1300 mPas |
| Mittlere Partikelgröße (LKS): | 38 nm |

Lagertest: mindestens 3 Monate stabil bei Raumtemperatur und bei 40°C

### 6) Beispiel 3: Vernetzerdispersion, erfindungsgemäß, Herstellung analog Beispiel 1 (70% ige Lösung des Prepolymers in Aceton)

Es wurde vorgegangen wie in Vergleichsbeispiel 1 beschrieben, dabei wurde jedoch zusammen mit der Hydroxypivalinsäure 129 g Aceton zugesetzt. Das Aceton wurde nach Zugabe des entionisierten Wassers im Vakuum (120 mbar) bei ca. 40°C abdestilliert

Die erhaltene feinteilige Dispersion hatte nachfolgende Eigenschaften:

| | |
|---|---|
| Feststoffgehalt: | ca. 38% |
| pH-Wert: | ca. 8,9 |
| Viskosität | ca. 165 mPas |
| Mittlere Partikelgröße (LKS): | 22 nm |

Lagertest: mindestens 3 Monate stabil bei Raumtemperatur und bei 40°C

### 7) Beispiel 4: Vernetzerdispersion, erfindungsgemäß, Kettenverlängerung durch DiolKomponente, Herstellung mit wenig Aceton (90% ige Lösung des Prepolymers in Aceton)

In einer Standard-Rührapparatur wurden 429,0 g (2,2 Val) Desmodur N 3300 vorgelegt und unter Stickstoff auf 70°C aufgeheizt. Anschließend gab man eine Teilmenge des DMP (76,9 g; 0,8 Val) portionsweise innerhalb von 30 Minuten zu der Schmelze. Es wurde bei 70°C gerührt, bis der theoretische Isocyanatgehalt von 11,62% erreicht oder unterschritten ist.

Zu der Schmelze wurden direkt nacheinander zugefügt: 63 g Aceton; 11,8 g (0,2 Val) 1,6-Hexandiol; 47,2 g (0,4 Val) Hydroxypivalinsäure und weitere 57,7 g (0,6 Val) DMP. Anschließend wurde bei Rückfluss gerührt, bis IR-spektroskopisch keine Isocyanatgruppen mehr nachweisbar waren.Dann wurden 39,2 g (0,44 Val) N,N-Dimethyl-ethanolamin zugegeben, 10 Min. nachgerührt und unter starkem Rühren 976,6 g 50°C warmes, entionisiertes Wasser zugegeben. Das Aceton wurde im Vakuum (120 mbar) bei ca. 40°C abdestilliert und die Dispersion anschließend noch 3 Stunden bei dieser Temperatur nachgerührt.

Die erhaltene feinteilige Dispersion hatte nachfolgende Eigenschaften:

| | |
|---|---|
| Feststoffgehalt: | ca. 37% |
| pH-Wert: | ca. 8,7 |
| Viskosität | ca. 1000 mPas |
| Mittlere Partikelgröße (LKS): | 14 nm |

Lagertest: mindestens 3 Monate stabil bei Raumtemperatur und bei 40°C

### 8) Beispiel 5: Vernetzerdispersion, erfindungsgemäß, Kettenverlängerung durch Triol-Komponente, Herstellung mit wenig Aceton (90% ige Lösung des Prepolymers in Aceton)

Es wurde vorgegangen wie in Beispiel 4 beschrieben, jedoch wurde statt Hexandiol die entsprechende Menge an OH-Gruppen durch Trimethylolpropan zugesetzt.

Die erhaltene feinteilige Dispersion hatte nachfolgende Eigenschaften:

| | |
|---|---|
| Feststoffgehalt: | ca. 37% |
| pH-Wert: | ca. 8,9 |
| Viskosität | ca. 3000 mPas |
| Mittlere Partikelgröße (LKS): | 14 nm |

Lagertest: mindestens 3 Monate stabil bei Raumtemperatur und bei 40°C

### 9) Beispiel 6: Vernetzerdispersion, erfindungsgemäß, Kettenverlängerung durch Triol-Komponente, wie Beispiel 5 jedoch Mischung aus verschiedenen Polyisocyanaten

Es wurde vorgegangen wie in Beispiel 5 beschrieben, jedoch statt Desmodur N 3300 ein Gemisch aus 174,0 g Desmodur N 3300 und 26 g Desmodur W zugesetzt.

Die erhaltene feinteilige Dispersion hatte nachfolgende Eigenschaften:

| | |
|---|---|
| Feststoffgehalt: | ca. 37% |
| pH-Wert: | ca. 9,0 |
| Viskosität | ca. 950 mPas |
| Mittlere Partikelgröße (LKS): | 20 nm |

Lagertest: mindestens 3 Monate stabil bei Raumtemperatur und bei 40°C

### 10) Beispiel 7: Vernetzerdispersion, erfindungsgemäß, Mischhydrophilierung aus Hydroxypivalinsäure und Dimethylolpropionsäure, Herstellung mit wenig Aceton (90% ige Lösung des Prepolymers in Aceton)

Es wurde so vorgegangen, wie in Beispiel 5 beschrieben, jedoch wurde das Hexandiol ersetzt durch eine entsprechende Menge an OH-Gruppen von Dimethylolpropionsäure (13,4 g) und der Anteil der Hydroxypivalinsäure wurde um 25% reduziert.

Die erhaltene feinteilige Dispersion hatte nachfolgende Eigenschaften:

| | |
|---|---|
| Feststoffgehalt: | ca. 37% |
| pH-Wert: | ca. 8,9 |
| Viskosität | ca. 3500 mPas |
| Mittlere Partikelgröße (LKS): | 13 nm |

Lagertest: mindestens 3 Monate stabil bei Raumtemperatur und bei 40°C

**Tabelle 1: Anwendungstechnischer Test**

| (Mengenangaben in Gramm) Herstellung von Lackformulierungen, Einbrennen und Prüfung der Klarlacke | | | | |
|---|---|---|---|---|
| Dispersion | aus Bsp. 4 | aus Bsp. 6 | aus Bsp. 7 | * |
| Menge der Dispersion | 68,6 | 70,0 | 65,7 | 66,8 |
| Bayhydrol^{®} D 270 | 50,0 | 50,0 | 50,0 | 50,0 |
| Additol XW 395 | 1,1 | 1,1 | 1,1 | 1,1 |
| Surfynol 104 | 1,1 | 1,1 | 1,1 | 1,1 |
| Dest. Wasser | 66,3 | 58,0 | 57,0 | 69,0 |
| Festkörper im Lack [%] | 34,6 | 34,1 | 34,1 | 31,9 |
| Auslaufzeit der Lackformulierung [S] ^{[3]} | 37 | 41 | 37 | 39 |
| Einbrennbedingungen | 10'RT + 20' 140°C | 10'RT + 20' 140°C | 10'RT + 20' 140°C | 10'RT + 20' 140°C |
| Filmoptik (Sichtprüfung) | o.k. | o.k. | o.k. | o.k. |
| Pendelhärte [s] ^{[2]} | 95 | 127 | 139 | 70 |
| Anlösbarkeit ^{[1]} | 2/2/3/4 | 2/2/3/4 | 2/2/3/4 | 2/3/4/4 |

| | | | | |
|---|---|---|---|---|
| * Bayhydur ^{®} VP LS 2310, handelsübliche wässrige Dispersion eines Butanonoxim-blockierten Polyisocyanates, Festgehalt 38% Bayer MaterialScience AG, Leverkusen, DE. (1) 1 Minute, Reihenfolge der Lösungsmittel: Xylol / Methoxypropylacetat / Ethylacetat/Aceton Beurteilung: 0 sehr gut bis 5 schlecht Eine Chemikalienbeständigkeit von 4 oder weniger bei den beschriebenen Lösemitteln war erforderlich. (2) Die Messung der Pendelhärten erfolgte nach der Methode von König entsprechend DIN 53157. Eine Pendelhärte von mindestens 80 Sekunden war erforderlich. (3) Die Auslaufzeit wurde in einem Becher nach DIN 53 211 ermittelt. | | | | |

Eine Durchführung analoger Tests mit den Vergleichsbeispielen war nicht möglich, da diese bei Testbeginn bereits einen erheblichen Bodensatz enthielten. Dieser Bodensatz verhinderte eine zuverlässige lacktechnische Ausprüfung durch anwendungstechnische Tests.

Es zeigt sich, dass die erfindungsgemäßen Polyisocyanatdispersionen lagerstabil sind und dass die erfindungsgemäßen einbrennbaren Beschichtungsmittel die Kriterien hinsichtlich Lackoptik, Chemikalienfestigkeit und Pendelhärten erfüllen.

Der Lack aus dem Vernetzer Bayhydur ^{®} VP LS 2310 weist gegenüber den Lacken aus den erfindungsgemäßen Vernetzern diverse Nachteile auf (geringer Festkörper der Lackformulierung bei vergleichbarer Auslaufzeit, schlechtere Chemikalienbeständigkeit, geringere Lackhärte).

## Patentansprüche

1. Verfahren zur Herstellung von Dispersionen blockierter Polyurethanprepolymere, **dadurch gekennzeichnet, dass**
I) zunächst ein blockiertes Polyurethanprepolymer durch Umsetzung von
a) 100 Äquivalent-% mindestens eines Polyisocyanats mit
b) 50 bis 90 Äquivalent-% bezogen auf die isocyanatreaktiven Gruppen 1H-Pyrazole als Blockierungsmittel,
c) 5 bis 45 Äquivalent-% bezogen auf die isocyanatreaktiven Gruppen einer Monohydroxycarboasäure als Hydrophilierungsmittel und
d) 0 bis 25 Äquivalent-% bezogen auf die isocyanatreaktiven Gruppen einer Polyhydroxycarbonsäure als Hydrophilierungsmittel und
e) 0 bis 15 Äquivalent-% bezogen auf die isocyanatreaktiven Gruppen einer mindestens, bezogen auf isocyanatreaktiven Gruppen, di- oder polyfunktionellen Kettenverlängenmgskomponente mit einem Molekulargewicht von 32 bis 350 g/mol,
hergestellt wird, wobei
i) dies unter Verwendung von wasser(tei)mischbaren, gegenüber NCO-Gruppen inerten, organischen Lösemitteln mit Siedepunkten unterhalb von 120°C (bei 1013 mbar) erfolgt,
ii) und diese in einer Menge verwendet werden, so dass das in der Reaktionslösung enthaltene Polyurethanprepolymer nach vollständiger Umsetzung in einer Menge von 70 bis 98 Gew.-% vorliegt,
II) die aus Schritt (I) erhaltene Polyurethanprepolymer-Lösung in Wasser dispergiert wird, wobei vor, während oder nach der Dispergierung eine zumindest teilweise Deprotonierung der Carbonsäuregruppen mit einer Base erfolgt, und dann
III) ggf. auch parallel während des Dispergierens, das enthaltene organische Lösungsmittel vollständig destillativ entfernt wird, so dass nach der Destillation weniger als 5 Gewichtsprozent des Lösemittels in der Dispersion erhalten bleiben.

2. Verfahren zur Herstellung von Dispersionen blockierter Polyurethanprepolymere gemäß Anspruch 1 **dadurch gekennzeichnet, dass** in Komponente I)a) Polyisocyanate auf Basis von Hexamethylendiisocyanat, Isophorondiisocyanat und/oder 4,4'-Diisocyanatodicyclohexylmethan eingesetzt werden.

3. Verfahren zur Herstellung von Dispersionen blockierter Polyurethanprepolymere gemäß Anspruch 1, **dadurch gekennzeichnet, dass** in Komponente I)c) Hydroxypivalinsäure als Hydrophilierungsmittel verwendet wird.

4. Verfahren zur Herstellung von Dispersionen blockierter Polyurethanprepolymere gemäß Anspruch 1, **dadurch gekennzeichnet, dass** in Komponente I)d) Dimethylolpropionsäure als Hydrophilierungsmittel verwendet wird.

5. Verfahren zur Herstellung von Dispersionen blockierter Polyurethanprepolymere gemäß Anspruch 1, **dadurch gekennzeichnet, dass** in Komponente I)e) Butandiol-1,4, Butandiol-1,3, Hexandiol-1,6 und/oder Trimethylolpropan als Kettenverlängerungskomponente verwendet werden.

6. Verfahren zur Herstellung von Dispersionen blockierter Polyurethanprepolymere gemäß Anspruch 1, **dadurch gekennzeichnet, dass** in Komponente I)i) aliphatisehe Ketone mit 3 bis 6 Kohlenstoffatomen als wasser(teil)mischbare Lösemittel verwendet werden.

7. Verfahren zur herstellung von Dispersionen blockierter Polyurethanprepolymere gemäß Anspruch 1, **dadurch gekennzeichnet, dass** in Schritt II) 2-Amino-2-methyl-1-propanol, Triethylamin und/oder N,N-Dimethylethanolamin als Deprotonierungsmittel verwendet werden.

8. Verfahren zur herstellung von Dispersionen blockierter Polyurethanprepolymere gemäβ Anspruch 1, **dadurch gekennzeichnet, dass** in Schritt III) das Lösemittel aus I)i) bis auf einen Gehalt von weniger als 3 Gewichtsprozent aus der Dispersion entfernt wird.

9. Verfahren zur Herstellung von Dispersionen blockierter Polyurethanprepolymere gemäß einem der Ansprüche 1 bis 8, **dadurch gekennzeichnet, dass** das Äquivalent-Verhältnis der Isocyanatkomponente I)a) zu gegenüber Isocyanat reaktionsfähigen Gruppen der Komponenten I)b), c), d) und e) bei 1:0,5 bis 1:1,7 liegt.

10. Dispersionen blockierter Polyurethanprepolymere erhältlich nach einem Verfahren gemäß einem der Ansprüche 1 bis 9.

11. Verwendung der blockierten Polyurethauprepolymer- Dispersionen gemäß Anspruch 10, zur Herstellung von Beschichtungsmitteln, von Kleb- und Dichtstoffen und von Elastomeren.

## Claims

1. Process for preparing dispersions of blocked polyurethane prepolymers, **characterized in that**
I) first of all a blocked polyurethane prepolymer is prepared by reacting
a) 100 equivalent of at least one polyisocyanate with
b) 50 to 90 equivalent%, based on the isocyanate-reactive groups, of 1H-pyrazoles as blocking agents,
c) 5 to 45 equivalent%, based on the isocyanate-reactive groups, of a monohydroxycarboxylic acid as hydrophilicizing agent and
d) 0 to 25 equivalent%, based on the isocyanate-reactive groups, of a polyhydroxycarboxylic acid as hydrophilicizing agent and
e) 0 to 15 equivalent%, based on the isocyanate-reactive groups, of a chain extender component which is at least, based on isocyanate-reactive groups, difunctional or polyfunctional and has a molecular weight of 32 to 350 g/mol,
i) this taking place using (partly) water-miscible organic solvents which are inert towards NCO groups and have boiling points below 120°C (at 1013 mbar),
ii) and these components being used in an amount such that the polyurethane prepolymer in the reaction solution is present, following complete reaction, in an amount of 70% to 98% by weight,
II) the polyurethane prepolymer solution obtained from step (I) is dispersed in water, an at least partial deprotonation of the carboxylic acid groups with a base taking place before, during or after dispersion, and then
III) optionally, even in parallel during dispersion, the organic solvent present is removed completely by distillation, so that after the distillation less than 5 per cent by weight of the solvent remains in the dispersion.

2. Process for preparing dispersions of blocked polyurethane prepolymers according to Claim 1, **characterized in that**, in component I)a), polyisocyanates based on hexamethylene diisocyanate, isophorone diisocyanate and/or 4,4'-diisocyanatodicyclohexylmethane are used.

3. Process for preparing dispersions of blocked polyurethane prepolymers according to Claim 1, **characterized in that**, in component I)c), hydroxypivalic acid is used as hydrophilicizing agent.

4. Process for preparing dispersions of blocked polyurethane prepolymers according to Claim 1, **characterized in that**, in component I)d), dimethylolpropionic acid is used as hydrophilicizing agent.

5. Process for preparing dispersions of blocked polyurethane prepolymers according to Claim 1, **characterized in that**, in component I)e), butane-1,4-diol, butane-1,3-diol, hexane-1,6-diol and/or trimethylolpropane are used as chain extender components.

6. Process for preparing dispersions of blocked polyurethane prepolymers according to Claim 1, **characterized in that**, in component I)i), aliphatic ketones having 3 to 6 carbon atoms are used as (partly) water-miscible solvents.

7. Process for preparing dispersions of blocked polyurethane prepolymers according to Claim 1, **characterized in that**, in step II), 2-amino-2-methyl-1-propanol, triethylamine and/or N,N-dimethylethanolamine are used as deprotonating agents.

8. Process for preparing dispersions of blocked polyurethane prepolymers according to Claim 1, **characterized in that**, in step III), the solvent from I)i) is removed from the dispersion down to a level of less than 3 per cent by weight.

9. Process for preparing dispersions of blocked polyurethane prepolymers according to any one of Claims 1 to 8, **characterized in that** the equivalent ratio of the isocyanate component I)a) to isocyanate reactive groups of components I)b), c), d) and e) is 1:0.5 to 1:1.7.

10. Dispersions of blocked polyurethane prepolymers obtainable by a process according to any one of Claims 1 to 9.

11. Use of the blocked polyurethane prepolymer dispersions according to Claim 10 for producing coating compositions, adhesives and sealants, and elastomers.

## Revendications

1. Procédé pour la préparation de dispersions de prépolymères de polyuréthane bloqués, **caractérisé en ce que**
I) on prépare d'abord un prépolymère de polyuréthane bloqué par transformation de
a) 100% en équivalent d'au moins un polyisocyanate avec
b) 50 à 90% en équivalent, par rapport aux groupes réactifs avec isocyanate, de 1H-pyrazole comme agent de blocage,
c) 5 à 45% en équivalent, par rapport aux groupes réactifs avec isocyanate, d'un acide monohydroxycarboxylique comme agent d'hydrophilisation et
d) 0 à 25% en équivalent, par rapport aux groupes réactifs avec isocyanate, d'un acide polyhydroxycarboxylique comme agent d'hydrophilisation et
e) 0 à 15% en équivalent, par rapport aux groupes réactifs avec isocyanate, d'un composant d'allongement de chaîne au moins difonctionnel ou polyfonctionnel par rapport aux groupes réactifs avec isocyanate présentant un poids moléculaire de 32 à 350 g/mole,
où
i) ceci est réalisé avec utilisation de solvants organiques (partiellement) miscibles avec l'eau, inertes par rapport aux groupes NCO, présentant des points d'ébullition inférieurs à 120°C (à 1013 mbars),
ii) et ceux-ci sont utilisés en une quantité telle que le prépolymère de polyuréthane contenu dans la solution réactionnelle après transformation complète se trouve en une quantité de 70 à 98% en poids,
II) la solution de prépolymère de polyuréthane obtenue dans l'étape (I) est dispersée dans l'eau, en réalisant, avant, pendant ou après la dispersion une déprotonation au moins partielle des groupes acide carboxylique avec une base, puis
III) le solvant organique contenu est éliminé complètement par distillation, le cas échéant aussi en parallèle pendant la dispersion, de manière telle qu'après la distillation, il reste moins de 5% en poids du solvant dans la dispersion.

2. Procédé pour la préparation de dispersions de prépolymères de polyuréthane bloqués selon la revendication 1, **caractérisé en ce qu'**on utilise, dans le composant I)a), des polyisocyanates à base d'hexaméthylènediisocyanate, d'isophoronediisocyanate et/ou de 4,4'-diisocyanatodicyclohexylméthane.

3. Procédé pour la préparation de dispersions de prépolymères de polyuréthane bloqués selon la revendication 1, **caractérisé en ce qu'**on utilise dans le composant I)c) de l'acide hydroxypivalique comme agent d'hydrophilisation.

4. Procédé pour la préparation de dispersions de prépolymères de polyuréthane bloqués selon la revendication 1, **caractérisé en ce qu'**on utilise dans le composant I)d) de l'acide diméthylolpropionique comme agent d'hydrophilisation.

5. Procédé pour la préparation de dispersions de prépolymères de polyuréthane bloqué, selon la revendication 1, **caractérisé en ce qu'**on utilise dans le composant I)e) du butanediol-1,4, du butanediol-1,3, de l'hexanediol-1,6 et/ou du triméthylolpropane comme composant d'allongement de chaîne.

6. Procédé pour la préparation de dispersions de prépolymères de polyuréthane bloqué, selon la revendication 1, **caractérisé en ce qu'**on utilise dans le composant I)i) des cétones aliphatiques comprenant 3 à 6 atomes de carbone comme solvants (partiellement) miscibles avec l'eau.

7. Procédé pour la préparation de dispersions de prépolymères de polyuréthane bloqué, selon la revendication 1, **caractérisé en ce qu'**on utilise dans l'étape II) du 2-amino-2-méthyl-1-propanol, de la triéthylamine et/ou de la N,N-diméthyléthanolamine comme agent de déprotonation.

8. Procédé pour la préparation de dispersions de prépolymères de polyuréthane bloqué, selon la revendication 1, **caractérisé en ce que** dans l'étape III), le solvant de I)i) est éliminé de la dispersion jusqu'à une teneur inférieure à 3% en poids.

9. Procédé pour la préparation de dispersions de prépolymères de polyuréthane bloqué selon l'une quelconque des revendications 1 à 8, **caractérisé en ce que** le rapport des équivalents du composant isocyanate I)a) aux groupes aptes à une réaction avec isocyanate des composants I)b), c), d) et e) est de 1:0,5 à 1:1,7.

10. Dispersions de prépolymères de polyuréthane bloqués pouvant être obtenues selon un procédé selon l'une quelconque des revendications 1 à 9.

11. Utilisation des dispersions de prépolymères de polyuréthane bloqués selon la revendication 10 pour la préparation d'agents de revêtement, d'adhésifs et de substances d'étanchéité et d'élastomères.
